(19) Europäisches Patentamt
European Patent Office
Office européen des brevets

(11) Veröffentlichungsnummer : **0 081 223**
**B1**

# (12) EUROPÄISCHE PATENTSCHRIFT

(45) Veröffentlichungstag der Patentschrift : 07.03.90

(51) Int. Cl.$^5$ : **H 04 N 11/00**

(21) Anmeldenummer : 82111265.3

(22) Anmeldetag : 06.12.82

## (54) Verfahren zur Übertragung von digitalen Farbbildsignalen.

(30) Priorität : 09.12.81 DE 3148763

(43) Veröffentlichungstag der Anmeldung : 15.06.83 Patentblatt 83/24

(45) Bekanntmachung des Hinweises auf die Patenterteilung : 07.03.90 Patentblatt 90/10

(84) Benannte Vertragsstaaten : AT CH DE FR IT LI

(56) Entgegenhaltungen :
EP–A– 0 013 124
FR–A– 2 443 167
ELECTRONICS LETTERS, Band 6, Nr. 1, 8. Januar 1970, Seiten 5-7, Hitchin., Herts., GB; R.M. DORWARD: "Aspect of the quantisation noise associated with the digital coding of colour-television signals"
JOURNAL OF THE SMPTE, Band 82, Nr. 8, August 1973, Seiten 649-654, Scarsdale, US; A.A. GOLDBERG: "PCM Encoded NTSC Color Television Subjective Tests"
Digital Transm. Systems, P. Bylansky et al, P.Peregrinus Ltd.,1980

(73) Patentinhaber : **Siemens Aktiengesellschaft**
**Wittelsbacherplatz 2**
**D-8000 München 2 (DE)**

(72) Erfinder : **Pexa, Günther**
**Brückenweg 2A**
**D-8031 Wörthsee (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 081 223 B1

Jouve, 18, rue St-Denis, 75001 Paris, France

**Beschreibung**

Die Erfindung betrifft ein Verfahren zur Übertragung von digitalen Farbbildsignalen, bei dem das analoge Farbbildsignal senderseitig abgetastet, in ein digitales Signal umgesetzt und übertragen wird und empfangsseitig in das ursprüngliche analoge Farbbildsignal zurück umgesetzt wird.

Die Grundlagen der digitalen Übertragungssysteme sind in « Digitaltransmussionssystems », von P. Bylansky und DG.W. Ingram, Peter Penegrims Ltd., Stevenage 1980, insbesondere auf den Seiten 26 bis 29 beschrieben, die sich vor allem mit der Analog/Digital-Umsetzung befassen.

Aus der Patenanmeldung FR-A-2443/67 ist ein Analog/Digital-Umsetzer bekannt, bei dem zwischen Abtastwerten jeweils ein Codewort mit dem Wert Null eingefügt wird, wodurch die Abtastspektren auseinanderrücken.

In der Zeitschrift Electronics Letters, 8th Jan. 1970, Vol. 6, No. 1 sind Störungen des Fernsehbildes bei der digitalen Übertragung von Farbfernsehsignalen beschrieben. Ursache dieser Störungen ist das Quantisierungsgeräusch, das bei der Analog/Digital-Umsetzung auftritt. Diese Störungen werden praktisch unsichtbar, wenn sie stets an derselben Stelle des Bildschirmes erscheinen. Hierzu sind aufwendige Synchronisiereinrichtungen erforderlich. Zudem sind wegen der unterschiedlichen Fernsehnormen Umschalteinrichtungen erforderlich. Da zudem meist auch noch die Übertragungsgeschwindigkeit vorgegeben ist, muß zusätzlich ein Stopfverfahren angewendet werden.

In der europäischen Patentanmeldung 0 025 364 ist ein Übertragungsverfahren für Farbfernsehsignale mit Synchronisiereinrichtung beschrieben, das jedoch wegen der bereits geschilderten Nachteile für ein transparentes Übertragungsverfahren nicht in Frage kommt.

Aufgabe der Erfindung ist es, ein für unterschiedliche Farbfernsehsysteme geeignetes Übertragungsverfahren anzugeben.

Die Erfindung wird dadurch gelöst, daß sendeseitig die Grundabtastfrequenz um ein ganzzahliges Vielfaches erhöht wird, daß die Abtastwerte digitalisiert werden, daß Störungen zwischen den Neztspektren des digitalisierten Farbbildsignals durch ein digitales Filter ausgesiebt werden und daß nur jeder n-te Abtastwert übertragen wird.

Die Erfindung beruht auf der Erkenntnis, daß das Quantisierungsrauschen als Störung dann durch Filter beseitigt werden kann, wenn die Abtastfrequenz ausreichend erhöht wird. Das Quantisierungsrauschen, das als Oberwellen in Erscheinung tritt, wird durch ein digitales Filter beseitigt. Anschließend wird durch einen Dividierer die Übertragungsrate wieder reduziert.

Das Prinzip der Erhöhung der Rate der Abtastwerte und des Herausfilterns von Störungen, die zwischen den Nutzspektren liegen, kann auch auf der Empfangsseite angewendet werden.

Es ist zweckmäßig, daß empfangsseitig die Rate der digitalen Abtastwerte um einen ganzzahligen Faktor m durch Einfügen von Konstanten erhöht wird, daß durch ein digitales Filter Lücken zwischen den Nutzfrequenzbändern im periodischen Spektrum des empfangenen Farbbildsignals erzeugt werden und daß dieses so erzeugte Digitalsignal in ein analoges bandbegrenztes Signal umgesetzt wird.

Diese Maßnahme ist bei nicht ausreichend linearen D/A-Umsetzern angebracht. Durch das digitale Filter wird ein lückenhaftes Spektrum erzielt, wobei die Oberwellen niedriger Ordnung in die Lücken fallen und durch ein Filter, das ohnehin dem D/A-Umsetzer nachgeschaltet ist, herausgesiebt werden.

Die sendeseitigen und die empfangsseitigen Maßnahmen können zur Erzielung einer qualitativ optimalen Übertragung kombiniert werden.

Es ist zweckmäßig, daß sendeseitig dem analogen Farbbildsignal ein Dithersignal hinzuaddiert wird.

Durch ein Dithersignal (hier kann es sich um eine Einzelfrequenz handeln, die außerhalb des Nutzbandes liegt oder auch um ein breitbandiges Signal wie Rauschen) wird die Spektralverteilung des Quantisierungsfehlers verändert und damit eine weitere Verringerung der Farbstörungen erreicht.

Weitere Vorteilhafte Ausbildungen der Erfindung sind in den übrigen Unteransprüchen angegeben.

Ausführungsbeispiele der Erfindung werden anhand der Figuren 1 bis 7 näher erläutert.

Es zeigen

Fig. 1 ein Blockschaltbild der prinzipiellen Übertragungsanordnung,

Fig. 2 ein erweitertes Prinzipschaltbild,

Fig. 3 eine Spektralfunktion nach der Abtastung,

Fig. 4 eine Spektralfunktion nach der Abtastung mit einer höheren Abtastfrequenz,

Fig. 5 die Spektralfunktion eines Farbfernsehsignals,

Fig. 6 den schematischen Aufbau eines geeigneten Digitalfilters und

Fig. 7 die Dämpfungskurve dieses Digitalfilters.

Fig. 1 zeigt die prinzipielle Anordnung zur Durchführung des Übertragungsverfahrens. Sendeseitig liegt an einem Eingang E1 das Farbfernsehsignal an. Es wird durch einen analogen Tiefpaß 1 frequenzmäßig begrenzt. An den Ausgang des analogen Tiefpasses 1 ist eine Abtastschaltung 2 angeschlossen, deren Ausgang mit dem Eingang eines A/D-Umsetzers 3 verbunden ist. Diesem ist ein digitales Filter 4 nachgeschaltet, dessen Ausgang über einen Dividierer 5 mit dem Eingang einer sendeseitigen Übertragungseinrichtung 6 verbunden ist. Über den Ausgang A1 dieser Übertragungseinrichtung wird das Farbfernsehsignal ausgesendet.

Auf der Empfangsseite wird das Farbfernsehsignal einer empfängerseitigen Übertragungseinrichtung 10 mit dem Eingang E2 zugeführt. An deren Ausgang ist ein D/A-Umsetzer 11 angeschaltet, dem ein analoger Tiefpaß 12 nachgeschaltet ist. An dem Ausgang A2 dieses Tiefpasses liegt das analoge Farbfernsehsignal wieder vor.

Die minimal mögliche Abtastfrequenz muß der doppelten höchsten Frequenz des abzutastenden Analogsignals entsprechen, bei der PAL-Fernsehnorm also. ca. 12 MHz.

Da zudem die Bitrate auf der Übertragungsstrecke im allgemeinen fest Vorgegeben ist, kann unter Berücksichtigung der Wortlänge eines digitalisierten Abtastwertes und eventuell zusätzlich zu übertragender Daten, wie beispielsweise eines Tonsignals, über die Wahl einer geeigneten Abtastfrequenz eine Geschwindigkeitsanpassung erfolgen.

Die so ausgewählte Abtastfrequenz, die im allgemeinen nur wenig höher als die minimale Abtastfrequenz ist, wird im folgenden als Grundabtastfrequenz $f_A$ bezeichnet.

Bei der Abtastung mit der minimalen Grundabtastfrequenz $f_A$ ergibt sich ein in Fig. 3 prinzipiell dargestelltes Spektrum. Wird nun die Abtastfrequenz auf den Wert $f_{2A}$ verdoppelt, so ergibt sich das in Fig. 4 dargestellte Spektrum, das Lücken zwischen den Nutzspektren aufweist. Diese Lücken enthalten die störenden Spektralanteile, die durch den Quantisierungsvorgang entstehen und Oberwellen entsprechen. Wird eine noch höhere Abtastfrequenz gewählt, können auch Oberwellen höherer Ordnung herausgefiltert werden. Die Wahl der Abtastfrequenz ist jedoch durch die Technologie beschränkt. Zur Zeit sind Faktoren von ca. $n = 6$ ohne größeren Aufwand realisierbar.

Durch den Dividierer 5 wird die Übertragungsrate reduziert, indem nur jeder n-te Wert übertragen wird. Damit wird wieder das ursprüngliche Nutzspektrum erzielt, bei dem jedoch die Störungen reduziert sind.

Auf der Empfangsseite wird das digitale Signal von der empfangsseitigen Übertragungseinrichtung 10 dem D/A-Umsetzer 11 zugeführt. Ist dieser ausreichend linear, so kann dieses Signal mit der auch für die Übertragung verwendeten Grundabtastfrequenz $f_A$ decodiert werden. Das Tiefpaßfilter 12 sorgt wiederum für eine Begrenzung auf das Nutzspektrum.

Weist der D/A-Umsetzer jedoch eine nicht ausreichende Linearität auf, so wird entsprechend zur Sendeseite die Datenrate um einen Faktor m ($m = 2, 3, 4...$) durch Einfügen von konstanten Werten vervielfacht. Dies geschieht nach Fig. 2 durch einen Multiplizierer 13, der dem Ausgang der empfangsseitigen Übertragungseinrichtung 10 nachgeschaltet ist. Der Ausgang des Multiplizierers 13 ist mit dem Eingang eines digitalen Filters 14 verbunden, dessen Ausgang mit dem Eingang des D/A-Umsetzers 11 verbunden ist. Durch das digitale Filter 14 wird wieder ein Spektrum erzeugt, das, wie in Fig. 4, Lücken aufweist. Die Faktoren n und m können unterschiedlich sein. Die bei der D/A-Umsetzung erzeugten Oberwellen werden durch den Tiefpaß 12 beseitigt.

In Fig. 2 wurde auch die Sendeseite-leicht modifiziert. Es wurde ein einfaches digitales Filter 4 verwendet, das jedoch unzulässige Verzerrungen aufweist. Diese werden durch einen analogen Entzerrer 7 kompensiert, der dem A/D-Umsetzer 3 bzw. der Abtastschaltung 2 vorgeschaltet ist. Auf der Empfangsseite muß bei der Verwendung des gleichen einfachen digitalen Filters 14 ein analoger Entzerrer dem D/A-Umsetzer 11 nachgeschaltet werden.

Ein Dithergenerator 8 ist über einen symbolisch dargestellten Summationspunkt mit dem Ausgang des Tiefpasses 1 zusammengeschaltet. Zu dem Farbfernsehsignal wird ein Dithersignal hinzuaddiert, das zu einer weiteren Verringerung der Farbstörungen führt.

Bei der Verwendung sog. Flash-Codierer als A/D-Umsetzer 3 kann die Abtastschaltung 2 entfallen. Ein Flash-Codierer weist eine der Anzahl möglicher Digitalwerte entsprechende Anzahl von Amplitudenstufen auf und codiert den anliegenden Amplitudenwert schlagartig.

In Fig. 5 ist der prinzipielle Spektralverlauf eines Farbfernsehsignals dargestellt. Im niederfrequenteren Bereich wird das Helligkeitssignal L übertragen, während das Farbsignal ein höherfrequentes Spektrum C um den Farbträger $F_C$ erzeugt. Die Grundabtastfrequenz $f_A$ und der Faktor n werden so gewählt, daß Oberwellen und Mischprodukte nicht in die Nähe des Farbträgers $F_C$ fallen. Im Helligkeitsbereich wirken sich Störungen für das Auge dagegen weniger aus.

Bei der Übertragung von Farbfernsehsignalen mit unterschiedlichen Normen bleibt die Grundabtastfrequenz $f_A$ und damit die Übertragungsgeschwindigkeit konstant.

In Fig. 6 ist ein einfaches digitales Filter dargestellt. Es enthält sechs in Serie geschaltete Laufzeitglieder T1 bis T6, die durch bistabile Speicherelemente realisiert werden. Fünf Multiplikatoren M1 bis M5 sind an den Eingang E des Filters, an den Ausgang des zweiten Laufzeitgliedes T2, an den Ausgang des dritten Laufzeitgliedes T4 und an den Ausgang des sechsten Laufzeitgliedes T6 angeschaltet. Ihre Ausgänge sind über Addierer A1 bis A4 mit jeweils zwei Eingängen zusammengesetzt. Sinnvolle Faktoren für die Multiplikatoren M1 bis M5 sind -5/64, 5/16, 1/2, 5/16, -5/64. Der Ausgang des vierten Addierers A4 stellt gleichzeitig den Ausgang A des Filters dar. Die Laufzeiten der Laufzeitglieder T1 bis T6 sind der verwendeten Abtastfrequenz anzupassen bzw. es wird die Anzahl der digitalen Speicher den Abtastfrequenzen entsprechend verändert.

In Fig. 7 ist der prinzipielle Dämpfungsverlauf D in -dB- des einfachen digitalen Filters nach Fig. 6 für $n = 2$ dargestellt.

## Patentansprüche

1. Verfahren zur Übertragung von digitalen Farbbildsignalen, bei dem das analoge Farbbildsignal sendeseitig abgetastet, in ein digitales Signal umgesetzt und Übertragen wird und empfangsseitig in das ursprüngliche analoge Farbbildsignal zurück umgesetzt wird, dadurch gekennzeichnet, daß sendeseitig die Grundabtastfrequenz ($f_A$) um ein ganzzahliges Vielfaches n (n = 2, 3, 4...) erhöht wird, daß die Abtastwerte digitalisiert werden, daß Störungen zwischen den Nutzspektren des digitalisierten Farbbildsignales durch ein digitales Filter (4) ausgesiebt werden und daß nur jeder n-te Abtastwert übertragen wird.

2. Verfahren nach Anspruch 1, dadurch gekennzeichnet, daß empfangsseitig die Rate der digitalen Abtastwerte um einen ganzzahligen Faktor m (m = 2, 3, 4...) durch Einfügen von Konstanten erhöht wird, daß durch ein digitales Filter (14) Lücken zwischen den Nutzfrequenzbändern im periodischen Spektrum des empfangenen Farbbildsignals erzeugt werden und daß dieses so erzeugte Digitalsignal in ein analoges bandbegrenztes Signal umgesetzt wird.

3. Verfahren nach Anspruch 1 oder 2, dadurch gekennzeichnet, daß sendeseitig dem analogen Farbbildsignal ein Dithersignal hinzuaddiert wird.

4. Verfahren nach Anspruch 3, dadurch gekennzeichnet, daß ein breitbandiges Dithersignal verwendet wird.

5. Verfahren nach einem der vorhergehenden Ansprüche, dadurch gekennzeichnet, daß die Grundabtastfrequenz ($f_A$) so gewählt wird, daß Oberwellen und Mischprodukte nicht in der Nähe des Farbträgers ($F_C$) des Farbbildspektrums liegen.

6. Verfahren nach einem der vorhergehenden Ansprüche, dadurch gekennzeichnet, daß dieselbe Grundabtastfrequenz ($f_A$) bei verschiedenen Fernsehnormen verwendet wird, so daß die Übertragungsgeschwindigkeit konstant bleibt.

7. Schaltungsanordnung zur Durchführung des Verfahrens nach einem der Ansprüche 1 bis 6, die senderseitig eine Reihenschaltung eines analogen Tiefpasses (1), einer Abtastschaltung (2), eines A/D-Umsetzers (3) und einer Übertragungseinrichtung (6) aufweist, dadurch gekennzeichnet, daß zwischen dem A/D-Umsetzer (3) und der Übertragungseinrichtung (6) ein digitales Filter (4) mit nachgeschaltetem Dividierer (5) eingeschaltet ist.

8. Schaltungsanordnung nach Anspruch 7, dadurch gekennzeichnet, daß eine empfangsseitige Übertragungseinrichtung (10), ein Digital/Analog-Umsetzer (11) und ein analoger Tiefpaß (12) in Serie geschaltet sind, wobei zwischen der empfangsseitigen Übertragungseinrichtung (10) und dem Digital/Analog-Umsetzer (11) ein Multiplizierer (13) und ein digitales Filter (14) eingeschaltet ist.

9. Schaltungsanordnung nach Anspruch 7 oder 8, dadurch gekennzeichnet, daß ein einfacheres digitales Filter (4, 14) verwendet wird und ein analoger Entzerrer (7, 15) zur Kompensation der Filterverzerrungen vorgesehen ist.

10. Schaltungsanordnung nach Anspruch 9, dadurch gekennzeichnet, daß ein digitales Filter mit einer Reihenschaltung von sechs Laufzeitgliedern (T1 bis T6) vorgesehen ist, daß dieses Filter fünf Multiplikatoren (M1 bis M5) aufweist, von denen jeweils einer an den Eingang (E) des Filters, den Ausgang des zweiten Laufzeitgliedes (T2), den Ausgang des dritten Laufzeitgliedes (T3), den Ausgang des vierten Laufzeitgliedes (T4) und den Ausgang des sechsten Laufzeitgliedes (T6) angeschaltet sind und deren Ausgänge über Addierer (A1 bis A4) zusammengefaßt sind.

## Claims

1. Method of transmitting digital colour image signals, in which the analog colour image signal is sampled on the transmitting side, converted into a digital signal and transmitted and, on the receiving side, converted back into the original analog colour image signal, characterized in that, on the transmitting side, the basic sampling rate ($f_A$) is increased by an integral multiple n (n = 2, 3, 4...), in that the samples are digitized, in that interference between the useful spectra of the digitized colour image signal is filtered out by a digital filter (4) and in that only every n-th sample is transmitted.

2. Method according to Claim 1, characterized in that, on the receiving side, the rate of the digital samples is increased by an integral factor m (m = 2, 3, 4...) by inserting constants, in that gaps are created between the useful frequency bands in the periodic spectrum of the received colour image signal by a digital filter (14) and in that the digital signal produced in this way is converted into an analog band-limited signal.

3. Method according to Claim 1 or 2, characterized in that, on the transmitting side, a dither signal is added to the analog colour image signal.

4. Method according to Claim 3, characterized in that a broadband dither signal is used.

5. Method according to one of the preceding Claims, characterized in that the basic sampling rate ($f_A$) is selected in such a way that harmonics and mixture products do not lie in the proximity of the chrominance subcarrier ($F_C$) of the colour image spectrum.

6. Method according to one of the preceding Claims, characterized in that the same basic sampling rate ($f_A$) is used in various television standards, so that the transmission rate remains constant.

7. Circuit arrangement for performing the method according to one of Claims 1 to 6, which, on the transmitting side, has a series circuit of an analog low-pass filter (1), a sampling circuit (2), an A-D converter (3) and a transmitting device (6), characterized in that between the A-D converter (3) and the transmitting device (6) there is inserted a digital filter (4) with a divider (5) connected downstream.

8. Circuit arrangement according to Claim 7, characterized in that a transmitting device (10) on the receiving side, a digital-to-analog converter (11) and an analog low-pass filter (12) are connected in series, a multiplier (13) and a digital filter (14) being connected between the transmitting device (10) on the receiving side and the digital-to-analog converter (11).

9. Circuit arrangement according to Claim 7 or 8, characterized in that a simpler digital filter (4, 14) is used and an analog equalizer (7, 15) is provided for the compensation of the filter distortions.

10. Circuit arrangement according to Claim 9, characterized in that a digital filter with a series circuit of 6 delay sections (T1 to T6) is provided, in that this filter has five multipliers (M1 to M5), of which, in each case, one is connected to the input (E) of the filter, to the output of the second delay section (T2), to the output of the third delay section (T3), to the output of the fourth delay section (T4) and to the output of the sixth delay section (T6), and the outputs of which multipliers are combined via adders (A1 to A4).

**Revendications**

1. Procédé pour transmettre des signaux numériques d'images en couleur, selon lequel, côté émission, le signal analogique d'image en couleur est échantillonné, converti en un signal numérique et transmis et, côté réception, est reconverti en le signal analogique initial d'image en couleur, caractérisé par le fait que, côté émission, la fréquence d'échantillonnage de base ($f_A$) est accrue d'un multiple entier n (n = 2, 3, 4...), que les valeurs d'échantillonnage sont numérisées, que des parasites entre les spectres utiles du signal numérisé d'image en couleur sont éliminés au moyen d'un filtre numérique (4) et que seule chaque n-ème valeur d'échantillonnage est transmise.

2. Procédé suivant la revendication 1, caractérisé par le fait que, côté réception, la fréquence des valeurs numériques d'échantillonnage est multipliée par un facteur entier m (m = 2, 3, 4...) moyennant l'insertion de constantes, que des intervalles vides entre les bandes de fréquences utiles sont produits par un filtre numérique (14) dans le spectre périodique du signal d'image en couleur reçu et que ce signal numérique ainsi produit est converti en un signal analogique à bande limitée.

3. Procédé suivant la revendication 1 ou 2, caractérisé par le fait que, côté émission, un signal de modification chromatique est ajouté au signal analogique d'image en couleur.

4. Procédé suivant la revendication 3, caractérisé par le fait qu'on utilise un signal de modification chromatique à large bande.

5. Procédé suivant l'une des revendications précédentes, caractérisé par le fait que la fréquence d'échantillonnage ($f_A$) est choisie de manière que des harmoniques et des produits mixtes ne soient plus situés à proximité de la porteuse couleur ($F_C$) du spectre de l'image en couleur.

6. Procédé suivant l'une des revendications précédentes, caractérisé par le fait qu'on utilise cette même fréquence d'échantillonnage de base ($f_A$) pour différentes normes de télévision de manière que la vitesse de transmission reste constante.

7. Montage pour la mise en œuvre du procédé suivant l'une des revendications 1 à 6, caractérisé par le fait qu'il est prévu, côté émission, un circuit série comprenant un filtre passe-bas analogique (1), un circuit d'échantillonnage (2), un convertisseur analogique/numérique (3) et un dispositif de transmission (6), caractérisé par le fait qu'un filtre numérique (4), en aval duquel est branché un diviseur (5), est branché entre le convertisseur analogique/numérique (3) et le dispositif de transmission (6).

8. Montage suivant la revendication 7, caractérisé par le fait qu'un dispositif de transmission (10) situé côté réception, un convertisseur numérique/analogique (11) et un filtre passe-bas analogique (12) sont branchés en série, auquel cas un multiplicateur (13) et un filtre numérique (14) sont branchés entre le dispositif de transmission (10), situé côté réception, et le convertisseur numérique/analogique (11).

9. Montage suivant la revendication 7 ou 8, caractérisé par le fait qu'on utilise un filtre numérique (4, 14) plus simple et qu'on prévoit un égaliseur analogique (7, 15) servant à compenser les distorsions du filtre.

10. Montage suivant la revendication 9, caractérisé par le fait qu'il est prévu un filtre numérique comportant un circuit série formé de six circuits à retard (T1 à T6), que ce filtre comporte cinq multiplicateurs (M1 à M5), qui sont raccordés respectivement à l'entrée (E) du filtre, à la sortie du second circuit à retard (T2), à la sortie du troisième circuit à retard (T3), à la sortie du quatrième circuit à retard (T4) et à la sortie du sixième circuit à retard (T6) et dont les sorties sont réunies au moyen d'additionneurs (A1 à A4).

FIG 1

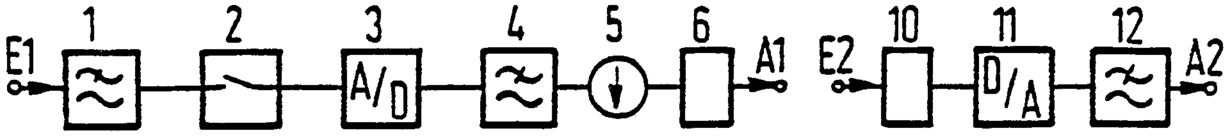


FIG 2

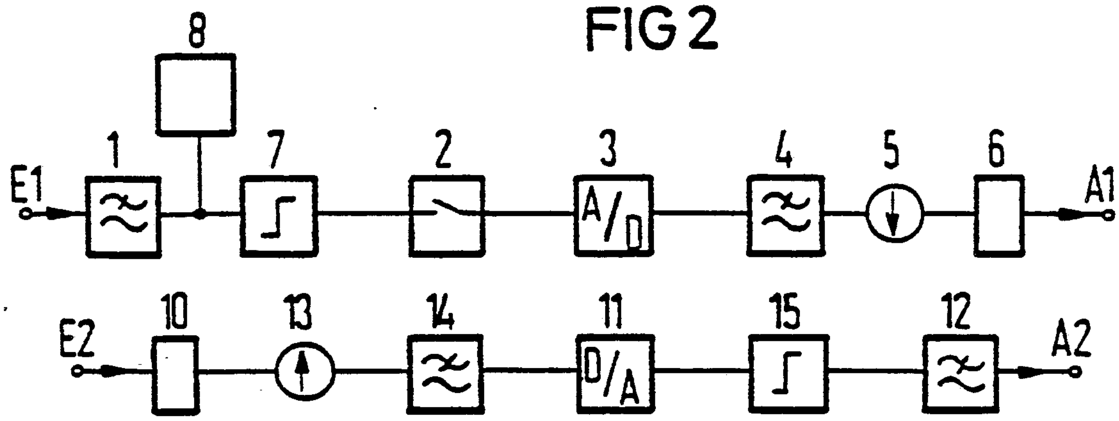


FIG 3

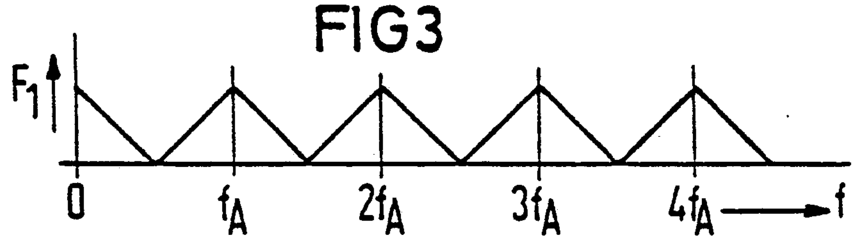


FIG 4

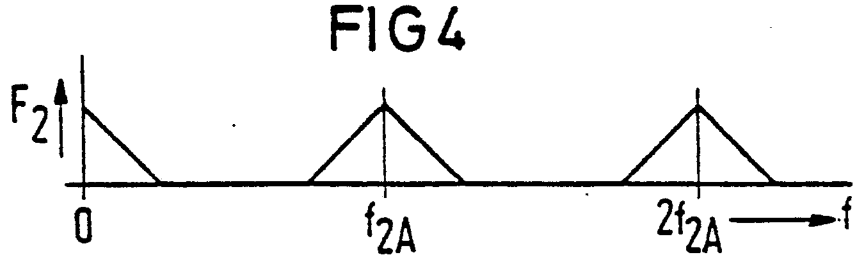


FIG 5

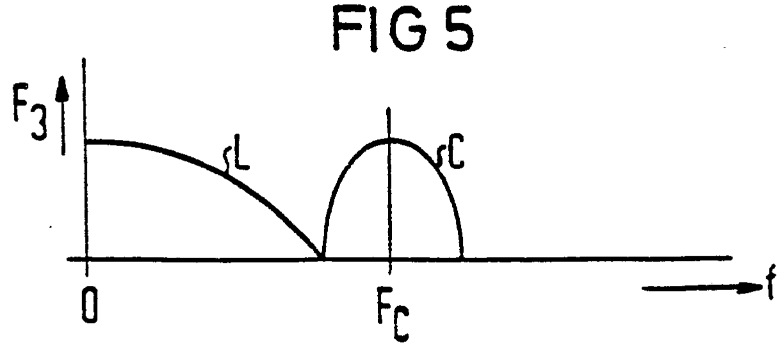

FIG 6

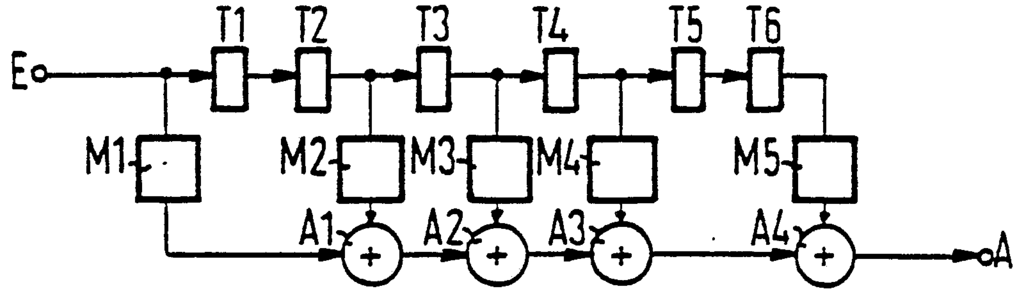
T1
T2
T3
T4
T5
T6
E
M1
M2
M3
M4
M5
A1
A2
A3
A4
A

FIG 7

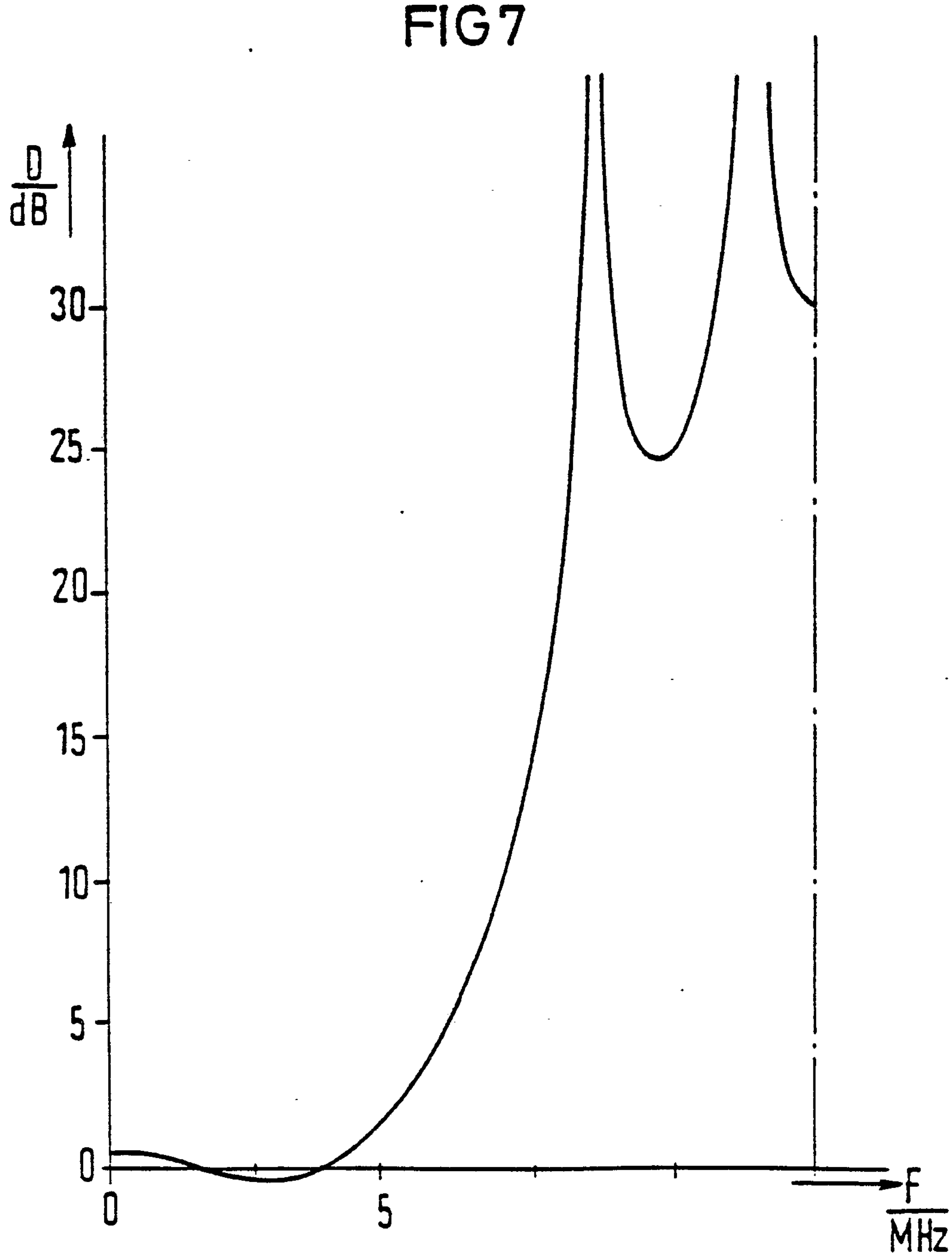
D
dB
30
25
20
15
10
5
0
0
5
F
MHz